# EUROPEAN PATENT SPECIFICATION

(11) **EP 3 671 788 B1**
(45) Date of publication and mention of the grant of the patent: **31.08.2022**
(21) Application number: 18213060.9
(22) Date of filing: 17.12.2018
(51) Int. Cl.: H01H 9/50, H01H 33/26, H01H 35/24, H01H 35/26, H01H 71/46, H02H 1/00

(54) **OVERPRESSURE RELIEF FLAP APPARATUS FOR A MEDIUM OR HIGH VOLTAGE SWITCHGEAR**
ÜBERDRUCKENTLASTUNGSKLAPPENVORRICHTUNG FÜR EINE MITTEL- ODER HOCHSPANNUNGSSCHALTANLAGE
APPAREIL À VOLET DE SOULAGEMENT DE SURPRESSION POUR UN APPAREILLAGE DE COMMUTATION MOYENNE OU HAUTE TENSION

(43) Date of publication of application: 24.06.2020
(60) Divisional application: 22181261.3
(73) Proprietor: ABB Schweiz AG, 5400 Baden (CH)
(72) Inventor: Verner, Miroslav, 67801 Blansko (CZ); Vyhlídal, Jan, 664 47 Strelice (CZ)
(74) Representative: Maiwald Patent- und Rechtsanwaltsgesellschaft mbH

(56) References cited:
- WO-A1-01/16984
- DE-A1-102009 010 229
- US-A- 2 773 146

## Description

### FIELD OF THE INVENTION

The present invention relates to an overpressure relief flap apparatus for a medium or high voltage switchgear, and to medium or high voltage switchgear having such an overpressure relief flap apparatus.

### BACKGROUND OF THE INVENTION

Fortunately, flash-overs inside medium or high voltage switchgear happen rarely, but they do occur for a number of different reasons. The consequences for personnel, equipment and process may then be devastating.

Switchgear failure through for example cable end box or busbar failure, causes a rapid expansion of air, gases and, in the case of oil filled switchgear, liquid. To mitigate this, the expanded air, gases and liquid is vented out of an overpressure relief flap within the switchgear. At the same time a switchgear circuit breaker is tripped, to make the switchgear safe.

Currently Ith limiters (also called microswitches) are installed on the overpressure relieve flap. In case of an electrical arc or flash-over, the air pressure inside the panel rapidly increases and opens the flap as discussed above. A microswitch operates with the flap, changing the system status to OFF and at the same time providing a tripping signal for a circuit breaker. However, there are sources of vibrations during flap travel or movement, which interrupts the tripping signal.

Thus in the current design (a microswitch / Ith limiter) is attached to flap, and vibrations are transmitted to the mobile or moveable contact of the Ith limiter microswitch during flap operation. This leads to interruption of the tripping signal. The sources of vibrations are:
- deaccelerating of the overpressure relief flap at the dead point (the mobile contact of the limiter microswitch has momentum that overcomes the force of the spring pushing the mobile contact to a solid "tripping" position, and this process leads to deceleration of the overpressure relief flap and to vibrations). This relates to protection of bus bar compartment or all compartments in case of no arc duct installation;
- impact of the Ith limiter microswitch on the side of arc duct. It relates to protection of circuit breaker and cable compartment in case of arc duct installation.

DE102009010229A1 describes that the tripping device has a switch, which is operated by a pressure. The electrical signal of a converter is provided with an operating element. The operating element is impinged with a given control movement by a mobile element. An electrical switching arrangement with an electrical switching device is also described.

Attempting to mitigate vibrations through tightening of the microswitch actuator can be problematic. This is because the reaction time of the Ith limiter microswitch depends on its setting. Tightening of the microswitch actuator can lead to a reduction in reaction time.

There is a need to provide for an improved way of providing a trip signal during an electrical arc event or flash-over for a medium or high voltage switchgear.

### SUMMARY OF THE INVENTION

Therefore, it would be advantageous to have improved means for providing a trip signal during an electrical arc event or flash-over for a medium or high voltage switchgear. The object of the present invention is solved with the subject matter of the independent claims, wherein further embodiments are incorporated in the dependent claims.

In a first aspect, there is provided an overpressure relief flap apparatus for a medium or high voltage switchgear as defined in appended claim 1

In an embodiment of the application, there is provided an overpressure relief flap apparatus for a medium or high voltage switchgear. The apparatus comprises:
- a lever; and
- a microswitch.

The lever is attached to an overpressure relief flap of a compartment of a switchgear. The microswitch is mounted to a frame of the compartment of the switchgear. When activated the microswitch is configured to transmit a trip signal to a circuit breaker of the switchgear. The lever is configured to activate the switch when the overpressure relief flap opens.

In other words, a new overpressure relief flap apparatus design uses a microswitch or limiter embedded in a metal housing and a lever operating it. The Limiter (microswitch) is installed on the panel frame, whilst the lever is installed on the overpressure relieve flap. Vibrations are then not transmitted to the limiter during flap operation.

In this way the effect of vibrations that can affect the tripping time signal are suppressed, because they are not transferred to the microswitch or limiter. In this manner, because vibrations are suppressed that would otherwise be transferred to a moveable or mobile contact of a microswitch or limiter, and uninterrupted trigger signal for a circuit breaker is provided in the situation when there is an electrical arc.

Thus, during opening of the overpressure relief flap, for example during the first 30ms of an electrical arc, the effect of vibrations that can affect the signal transmitted by the microswitch are mitigated and the overall reaction time of the apparatus in tripping a circuit breaker is improved.

Faster set-up and testing of the circuit breaker trip system, due to operation of an overpressure relief flap, is also provided. Additionally, the new design is significantly cheaper than previous designs.

The trip signal as well as being used to trip the circuit breaker can be used for other purposes, such as being used to indicate that there has been an event leading to opening of the overpressure relief flap.

In an example, an overtravel distance of the microswitch is less than 1mm.

Thus, a contact of the microswitch moves a distance after which it activates (termed pretravel) and can then move a further distance known as the overtravel distance and this distance is kept to a minimum whilst still ensuring that switching operation takes place, thereby providing a short bouncing time and reducing the effect of vibrations.

A microswitch having a contact with a small overtravel distance ensures that one can easily and correctly set up the limiter microswitch.

In an example, the overtravel distance of the microswitch is approximately 0.9mm.

According to the invention, the microswitch is mounted to the frame of the compartment via at least one damping component.

In an example, the at least one damping component comprises at least one ethylene propylene diene monomer (EPDM) rubber.

In other words, the microswitch is mounted or inserted to or into the frame of a compartment of a switchgear and is isolated from the frame/chassis by EPDM rubbers.

In an example, the microswitch is located within a case, and the microswitch is spaced from at least one wall of the case by the at least one damping component. The case is attached to the frame of the compartment of the switchgear.

In an example, wherein the case comprises metal.

In an example, the lever comprises metal.

In an example, the lever comprises one or more slotted mounted holes, oriented such that the lever can be moveably repositioned closer to or further away from the microswitch.

In this manner. The position of the lever can be easily adjusted with respect to the microswitch, thereby making set-up easier.

In an example, the lever is configured to enable a user to activate the microswitch with the lever when the overpressure relief flap is in a closed position.

In an example, the lever is configured to bend to enable the user to activate the microswitch with the lever when the overpressure relief flap is in a closed position.

In an example, a force required by the user to activate the microswitch with the lever when the overpressure relief flap is closed is less than 20N.

In this manner, the overpressure relief flap apparatus can be efficiently tested to ensure integrity of the protection function.

In a second aspect, there is provided a medium or high voltage switchgear comprising an overpressure relief flap apparatus according to the first aspect.

In an example, the switchgear comprises a circuit breaker. The circuit breaker is configured to be tripped upon receipt of the trip signal transmitted from the microswitch of the overpressure relief flap apparatus.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of an overpressure relief flap apparatus;
Fig. 2 shows a part of an overpressure relief flap apparatus;
Fig. 3 shows a part of an overpressure relief flap apparatus;
Fig. 4 shows an example of the trip signal for the overpressure relief flap apparatus of

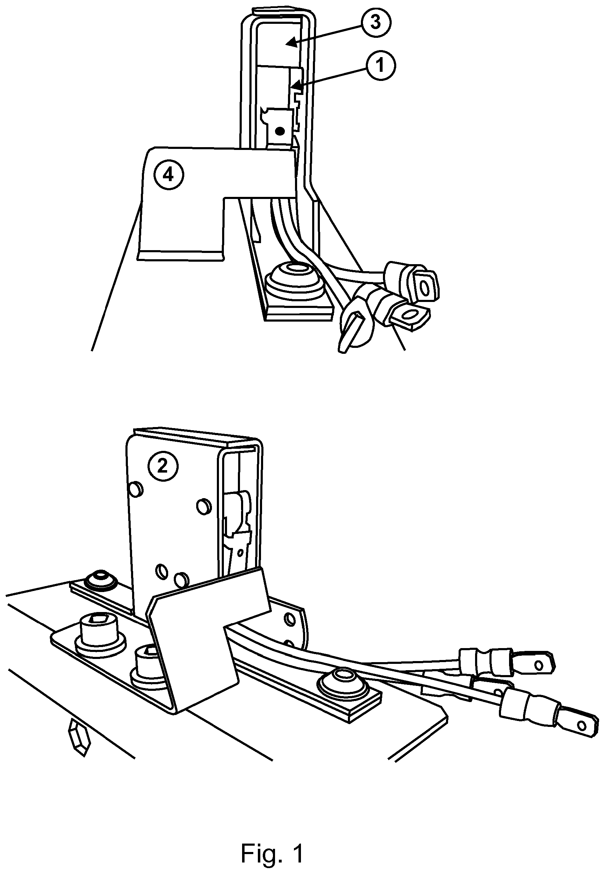

Figs. 1-3 in comparison to a previous system; and

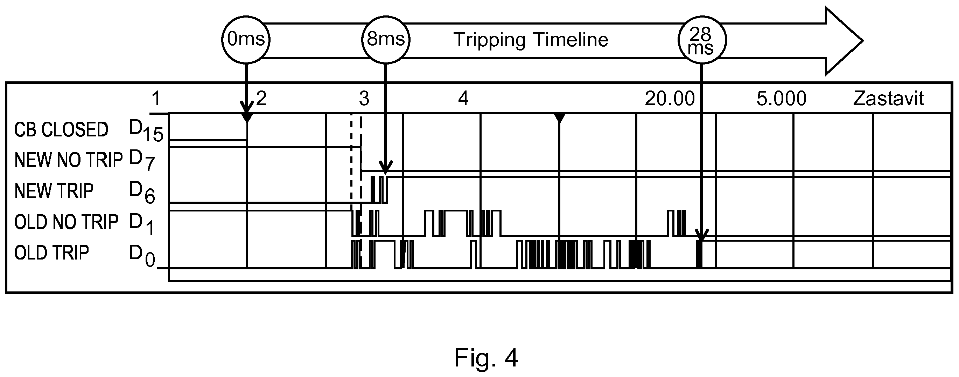

Fig. 4 shows a trip signal for a previous system.

### DETAILED DESCRIPTION OF EMBODIMENTS

Figs. 1-3 show examples of an overpressure relief flap apparatus for a medium or high voltage switchgear.

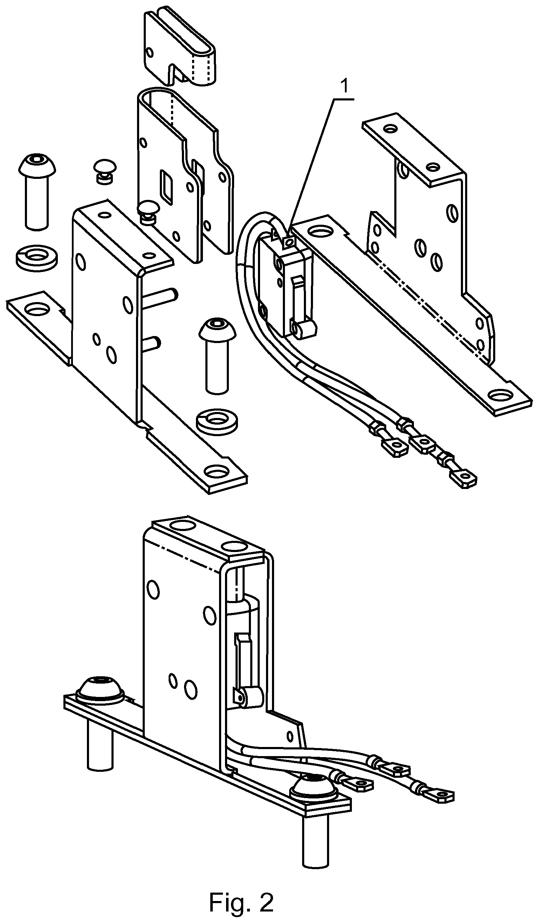

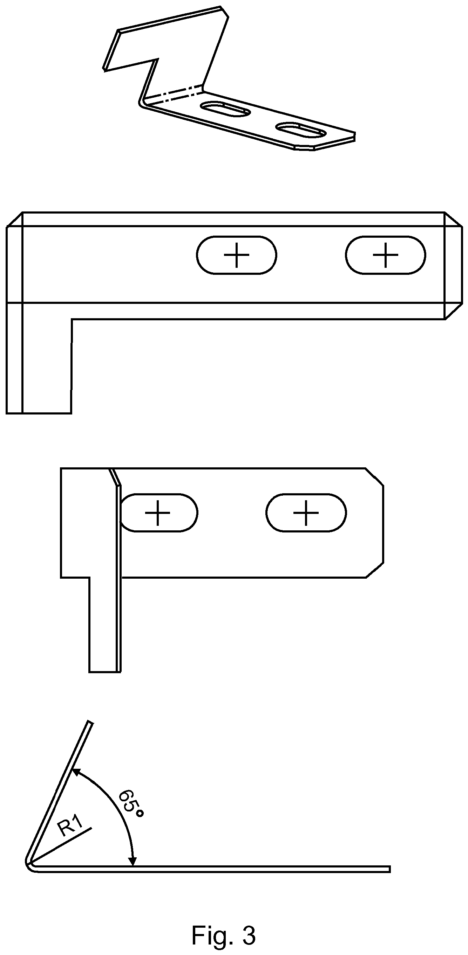

These figures show an overpressure relief flap apparatus for a medium or high voltage switchgear. The apparatus comprises a lever 4, and a microswitch 1. The lever is shown in detail in Fig. 3 and the microswitch is shown along with other components in detail in Fig. 2. The lever is attached to an overpressure relief flap of a compartment of a switchgear, as shown in Fig. 1. The overpressure relief flap is not shown in full detail in Fig. 1 for reasons of clarity. The microswitch is mounted to a frame of the compartment of the switchgear, as shown in Fig. 1. The full compartment is not shown in Fig. 1 again for reasons of clarity, but it is clear that these components are positioned such that when the overpressure relief flap opens, the lever contacts the microswitch to activate it. When activated the microswitch is configured to transmit a trip signal to a circuit breaker of the switchgear. The circuit breaker is not shown. The lever is configured to activate the switch when the overpressure relief flap opens.

According to an example, an overtravel distance of the microswitch is less than 1mm.

According to an example, the overtravel distance of the microswitch is approximately 0.9mm.

According to the invention, the microswitch is mounted to the frame of the compartment via at least one damping component 3.

According to an example, the at least one damping component comprises at least one ethylene propylene diene monomer (EPDM) rubber.

According to an example, the microswitch is located within a case 2. The microswitch is spaced from at least one wall of the case by the at least one damping component. The case is attached to the frame of the compartment of the switchgear.

According to an example, the case comprises metal.

According to an example, the lever comprises metal.

In an example, the metal is stainless steel. In an example, the metal is stainless steel 1.4310.

According to an example, the lever comprises one or more slotted mounted holes. These are located in a base of the lever, and are oriented such that the lever can be moveably repositioned closer to or further away from the microswitch.

According to an example, the lever is configured to enable a user to activate the microswitch with the lever when the overpressure relief flap is in a closed position.

According to an example, the lever is configured to bend to enable the user to activate the microswitch with the lever when the overpressure relief flap is in a closed position.

According to an example, a force required by the user to activate the microswitch with the lever when the overpressure relief flap is closed is less than 20N.

In an example, an arm part of the lever is connected to the base part of the lever that is attached to the overpressure relief flap. The arm part extend away from the base part at an angle. In the example the angle is 65 degrees, and can be other angles. In an example, the lever is attached to the overpressure relief flap via the base part, and the arm part is angled toward the microswitch location.

As discussed, in this way a medium or high voltage switchgear can have an overpressure relief flap apparatus as discussed above, and provides for improved way trip signal during an electrical arc event or flash-over for a medium or high voltage switchgear that can be used to trip a circuit breaker for example.

According to an example, the switchgear comprises a circuit breaker, and wherein the circuit breaker is configured to be tripped upon receipt of the trip signal transmitted from the microswitch of the overpressure relief flap apparatus.

Continuing with the figures, Fig. 1 and explaining details of a specific embodiment a microswitch 1 is used. This is a miniature Crouzet 831616 Wide contact gap microswitch that is resistant to vibrations. The microswitch is inserted in the metal case 2 and isolated by EPDM rubbers 3 from the chassis of the case. The case is itself mounted to a frame of a compartment of a medium voltage or high voltage adjacent to an overpressure relief flap, and thus the microswitch in addition to being resistant to vibrations is made more resistant to the effects of vibrations caused through mounting on the frame of the compartment and vibrationally isolating it through the use of damping EPDM rubbers. A lever 4 is used to operate the microswitch, and this is installed on the overpressure relieve flap itself. For fast setting and testing of the tripping function, the lever is made from stainless spring steel 1.4310 and can be operated by hand to activate the microswitch with a force (F < 20N). Fig. 2 shows specific details of how the microswitch is located to the case, and it is clear how the case can then be mounted to the frame of the switchgear compartment. Fig. 3 then shows specific details of the lever, again showing how it can be mounted to the overpressure relief flap and where slotted mounting slots provide adjustment means.

During an electrical arc, rapidly raised pressure (<10ms) cause the overpressure relieve flap to open upon which the lever is installed, and leading to operation of the microswitch. Electrical signal delivered to a protection circuit, trip a switchgear circuit breaker. This design suppresses vibrations transferred to the microswitch mobile or moveable contact during opening of the flap i.e. first 30ms of electrical arc and therefore speeds up reaction time. Fig. 4 shows an example of the trip signal for the new overpressure relief flap apparatus termed "NEW TRIP" against that for an existing trip signal shown as "OLD TRIP". This shows how vibrations that affect the previous device have been mitigated in the new overpressure relief flap apparatus described here.

It is to be noted that the measured total tripping time of new overpressure relief flap apparatus (limiter), with respect to initiation of a short-circuit current (measured in CB compartment) is 68ms, including the opening time of the flap and a maximum opening time of the circuit breaker (60ms). The requirement is less or equal to 100ms, which has been met.

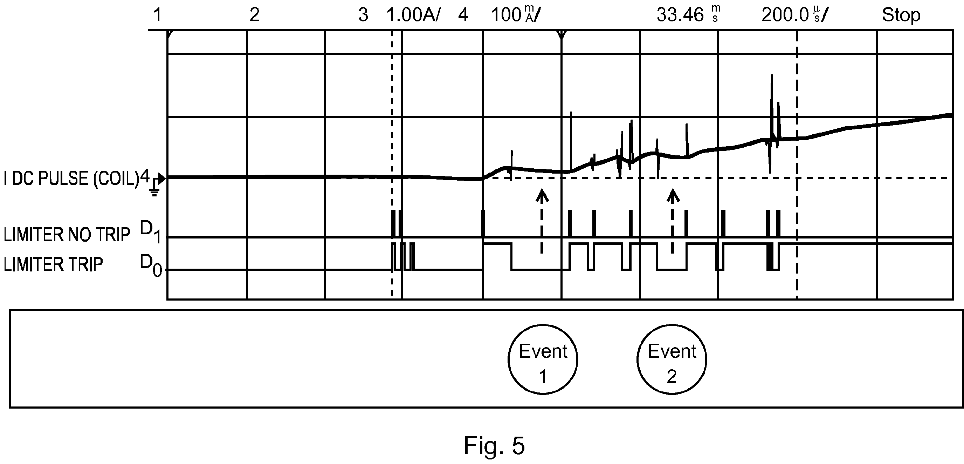

Fig. 5 serves to explain the problems caused by vibrations in existing systems, showing debouncing of the mobile contact of a microswitch during switching. Vibrations of the mobile contact slow the coil response on a voltage step unit, and thus prolong charging time. This so-called debouncing of mobile contact previously caused several voltage interruptions as shown in Fig. 5, where interruptions of a duration 100 µs and longer, cause current drop in the charging characteristic (see. events 1 and 2), and to an interrupted trigger signal. The new overpressure relief flap apparatus described here overcomes these issues.

It is to be noted that another method of processing a tripping signal is the protection relay and electronic tripping coil inside a circuit breaker. These devices check the number of disturbances in the signal and their time duration. After exceeding a filter time, the binary state change and signal enter the logic. An input filter can delay tripping of circuit breaker because of disturbances in the incoming signal caused by vibrations, and therefore as the new overpressure relief flap apparatus addresses the disturbances caused on the trigger signal, such processing is improved.

### Reference Numerals

1 Microswitch
2 Metal case
3 Damping component - e.g. EPDM rubber
4 Lever

## Claims

1. An overpressure relief flap apparatus for a medium or high voltage switchgear, the apparatus comprising:
- a lever (4); and
- a microswitch (1);
wherein, the lever is attached to an overpressure relief flap of a compartment of a switchgear;
wherein, the microswitch is mounted to a frame of the compartment of the switchgear;
wherein, when activated the microswitch is configured to transmit a trip signal to a circuit breaker of the switchgear; and
wherein, the lever is configured to activate the microswitch when the overpressure relief flap opens;
**characterised in that** the microswitch is mounted to the frame of the compartment via at least one damping component (3).

2. Overpressure relief flap apparatus according to claim 1, wherein an overtravel distance of the microswitch is less than 1mm.

3. Overpressure relief flap apparatus according to claim 2, wherein the overtravel distance of the microswitch is approximately 0.9mm.

4. Overpressure relief flap apparatus according to claim 1, wherein the at least one damping component comprises at least one ethylene propylene diene monomer (EPDM) rubber.

5. Overpressure relief flap apparatus according to any of claims 1-4, wherein the microswitch is located within a case (2), wherein the microswitch is spaced from at least one wall of the case by the at least one damping component, and wherein the case is attached to the frame of the compartment of the switchgear.

6. Overpressure relief flap apparatus according to claim 5, wherein the case comprises metal.

7. Overpressure relief flap apparatus according to any of claims 1-6, wherein the lever comprises metal.

8. Overpressure relief flap apparatus according to any of claims 1-7, wherein the lever comprises one or more slotted mounted holes, oriented such that the lever can be moveably repositioned closer to or further away from the microswitch.

9. Overpressure relief flap apparatus according to any of claims 1-8, wherein the lever is configured to enable a user to activate the microswitch with the lever when the overpressure relief flap is in a closed position.

10. Overpressure relief flap apparatus according to claim 9, wherein the lever is configured to bend to enable the user to activate the microswitch with the lever when the overpressure relief flap is in a closed position.

11. Overpressure relief flap apparatus according to any of claims 9-10, wherein a force required by the user to activate the microswitch with the lever when the overpressure relief flap is closed is less than 20N.

12. A medium or high voltage switchgear comprising an overpressure relief flap apparatus according to any of claims 1-11.

13. Medium or high voltage switchgear according to claim 12, wherein the switchgear comprises a circuit breaker, and wherein the circuit breaker is configured to be tripped upon receipt of the trip signal transmitted from the microswitch of the overpressure relief flap apparatus.

## Patentansprüche

1. Überdruckentlastungsklappenvorrichtung für eine Mittel- oder Hochspannungsschaltanlage, wobei die Vorrichtung umfasst:
- einen Hebel (4); und
- einen Mikroschalter (1);
wobei der Hebel an einer Überdruckentlastungsklappe eines Fachs einer Schaltanlage angebracht ist;
wobei der Mikroschalter an einem Rahmen des Fachs der Schaltanlage montiert ist;
wobei bei Aktivierung der Mikroschalter ausgelegt ist zum Übertragen eines Auslösesignals an einen Leistungsschalter der Schaltanlage; und
wobei der Hebel ausgelegt ist zum Aktivieren des Mikroschalters, wenn die Überdruckentlastungsklappe öffnet;
**dadurch gekennzeichnet, dass** der Mikroschalter an dem Rahmen des Fachs über mindestens eine Dämpfungskomponente (3) montiert ist.

2. Überdruckentlastungsklappenvorrichtung nach Anspruch 1, wobei eine Nachlaufdistanz des Mikroschalters kleiner ist als 1 mm.

3. Überdruckentlastungsklappenvorrichtung nach Anspruch 2, wobei die Nachlaufdistanz des Mikroschalters etwa 0,9 mm beträgt.

4. Überdruckentlastungsklappenvorrichtung nach Anspruch 1, wobei die mindestens eine Dämpfungskomponente mindestens einen Ethylen-Propylen-Dien-Monomer(EPDM)-Kautschuk umfasst.

5. Überdruckentlastungsklappenvorrichtung nach einem der Ansprüche 1-4, wobei sich der Mikroschalter innerhalb eines Gehäuses (2) befindet, wobei der Mikroschalter von mindestens einer Wand des Gehäuses durch die mindestens eine Dämpfungskomponente beabstandet ist und wobei das Gehäuse an dem Rahmen des Fachs der Schaltanlage angebracht ist.

6. Überdruckentlastungsklappenvorrichtung nach Anspruch 5, wobei das Gehäuse Metall umfasst.

7. Überdruckentlastungsklappenvorrichtung nach einem der Ansprüche 1-6, wobei der Hebel Metall umfasst.

8. Überdruckentlastungsklappenvorrichtung nach einem der Ansprüche 1-7, wobei der Hebel ein oder mehrere geschlitzte montierte Löcher umfasst, die derart orientiert sind, dass der Hebel beweglich näher an oder weiter weg von dem Mikroschalter umpositioniert werden kann.

9. Überdruckentlastungsklappenvorrichtung nach einem der Ansprüche 1-8, wobei der Hebel ausgelegt ist, einem Nutzer zu ermöglichen, den Mikroschalter mit dem Hebel zu aktivieren, wenn sich die Überdruckentlastungsklappe in einer geschlossenen Position befindet.

10. Überdruckentlastungsklappenvorrichtung nach Anspruch 9, wobei der Hebel ausgelegt ist, sich zu biegen, um dem Nutzer zu ermöglichen, den Mikroschalter mit dem Hebel zu aktivieren, wenn sich die Überdruckentlastungsklappe in einer geschlossenen Position befindet.

11. Überdruckentlastungsklappenvorrichtung nach einem der Ansprüche 9-10, wobei eine Kraft, die durch den Nutzer erforderlich ist, um den Mikroschalter mit dem Hebel zu aktivieren, wenn die Überdruckentlastungsklappe geschlossen ist, unter 20 N liegt.

12. Mittel- oder Hochspannungsschaltanlage, umfassend eine Überdruckentlastungsklappenvorrichtung nach einem der Ansprüche 1-11.

13. Mittel- oder Hochspannungsschaltanlage nach Anspruch 12, wobei die Schaltanlage einen Leistungsschalter umfasst und wobei der Leistungsschalter ausgelegt ist, bei Empfang des von dem Mikroschalter der Überdruckentlastungsklappenvorrichtung übertragenen Auslösesignals ausgelöst zu werden.

## Revendications

1. Appareil clapet de décharge de surpression destiné à un appareillage de commutation de moyenne ou haute tension, l'appareil comprenant :
- un levier (4) ; et
- un microrupteur (1) ;
le levier étant fixé à un clapet de décharge de surpression d'un compartiment d'un appareillage de commutation ;
le microrupteur étant fixé à un cadre du compartiment de l'appareillage de commutation ;
lorsque le microrupteur est activé, celui-ci étant configuré pour émettre un signal de déclenchement à un disjoncteur de l'appareillage de commutation ; et
le levier étant configuré pour activer le microrupteur lorsque le clapet de décharge de surpression s'ouvre ;
**caractérisé en ce que** le microrupteur est fixé au cadre du compartiment via au moins un composant d'amortissement (3).

2. Appareil clapet de décharge de surpression selon la revendication 1, une distance de surcourse du microrupteur étant inférieure à 1 mm.

3. Appareil clapet de décharge de surpression selon la revendication 2, la distance de surcourse du microrupteur étant d'environ 0,9 mm.

4. Appareil clapet de décharge de surpression selon la revendication 1, le ou les composants d'amortissement comprenant au moins un caoutchouc monomère éthylènepropylène-diène (EPDM).

5. Appareil clapet de décharge de surpression selon l'une quelconque des revendications 1 à 4, le microrupteur étant situé à l'intérieur d'un boîtier (2), le microrupteur étant espacé d'au moins une paroi du boîtier par le ou les composants d'amortissement, et le boitier étant attaché au cadre du compartiment de l'appareillage de commutation.

6. Appareil clapet de décharge de surpression selon la revendication 5, le boîtier comprenant du métal.

7. Appareil clapet de décharge de surpression selon l'une quelconque de revendications 1 à 6, le levier comprenant du métal.

8. Appareil clapet de décharge de surpression selon l'une quelconque de revendications 1 à 7, le levier comprenant un ou plusieurs trous montés oblongs, orientés de telle sorte que le levier peut être repositionné de manière mobile plus près ou plus loin du microrupteur.

9. Appareil clapet de décharge de surpression selon l'une quelconque de revendications 1 à 8, le levier étant configuré pour permettre à un utilisateur d'activer le microrupteur avec le levier lorsque le clapet de décharge de surpression est en position fermée.

10. Appareil clapet de décharge de surpression selon la revendication 9, le levier étant configuré pour se courber pour permettre à l'utilisateur d'activer le microrupteur avec le levier lorsque le clapet de décharge de surpression est en position fermée.

11. Appareil clapet de décharge de surpression selon l'une quelconque des revendications 9 et 10, une force requise par l'utilisateur pour activer le microrupteur avec le levier lorsque le clapet de décharge de surpression est fermé étant inférieure à 20 N.

12. Appareillage de commutation de moyenne ou haute tension comprenant un appareil clapet de décharge de surpression selon l'une quelconque des revendications 1 à 11.

13. Appareillage de commutation de moyenne ou haute tension selon la revendication 12, l'appareillage de commutation comprenant un disjoncteur, et le disjoncteur étant configuré pour être déclenché suite à la réception du signal de déclenchement émis en provenance du microrupteur de l'appareil clapet de décharge de surpression.
